# EUROPÄISCHE PATENTANMELDUNG

(11) **EP 2 607 728 A2**
(43) Veröffentlichungstag der Anmeldung: **26.06.2013**
(21) Anmeldenummer: 12195656.9
(22) Anmeldetag: 05.12.2012
(51) Int. Cl.: F16C 29/00

(54) **Verfahren zum Herstellen eines Linearschienensystems und Kombinationsprodukt eines Linearschienensystems**

(30) Priorität: 19.12.2011 DE 102011089079
(71) Anmelder: Aktiebolaget SKF, 41550 Göteborg (SE)
(72) Erfinder: Gehling, Bernd, 97440 Werneck Ründelshausen (DE)
(74) Vertreter: Schonecke, Mitja

(57) **Zusammenfassung**

Ein Verfahren zum Herstellen eines Linearschienensystems (210) mit einer auf einem Basisbauteil (220) befestigten Profilschiene (230) gemäß einem Ausführungsbeispiel umfasst ein Vorjustieren der Profilschiene (230) auf dem Basisbauteil (220) derart, dass eine Ausrichtungsfläche (260) des Basisbauteils (220) und eine Ausrichtungsfläche (270) der Profilschiene (230) einander zugewandt sind oder miteinander in Kontakt stehen, ein Bewirken einer Kraft zwischen dem Basisbauteil (220) und der Profilschiene mit Hilfe eines Exzenterhebels (100) derart, dass die Ausrichtungsflächen (260, 270) des Basisbauteils (220) und der Profilschiene (230) aufeinander gepresst werden, und ein Befestigen der Profilschiene (230) auf dem Basisbauteil (220).

## Beschreibung

Ausführungsbeispiele beziehen sich auf ein Verfahren zum Herstellen eines Linearschienensystems und auf ein Kombinationsprodukt eines Linearschienensystems.

Linearschienensysteme werden bei einer Vielzahl von Anwendungen eingesetzt, bei denen einzelne Komponenten einer Anlage bezogen auf andere Komponenten entlang einer Bewegungsrichtung zueinander bewegt werden sollen. Linearschienensysteme kommen so beispielsweise im Bereich der Messtechnik zum Einsatz, wenn Detektoren oder andere Komponenten linear bewegt werden sollen.

Hierbei sind Bewegungen, die mit Hilfe eines Linearschienensystems geführt bzw. gelagert werden, nicht im mathematischen Sinn auf eine lineare Bewegung, also auf eine Bewegung entlang einer mathematischen Geraden, beschränkt. Linearsysteme können vielmehr auch Bewegungen entlang einer gekrümmten Bahn bzw. entlang einer gekrümmten Linie führen.

Linearschienensysteme weisen so häufig wenigstens eine Profilschiene sowie ein Basisbauteil auf, auf dem die Profilschiene befestigt ist. Das Basisbauteil weist hierbei typischerweise eine Ausrichtungsfläche auf, die in Kontakt mit einer entsprechenden Ausrichtungsfläche der Profilschiene steht. Diese Ausrichtungsflächen stellen häufig geschliffene Flächen dar und werden, da sie zur Begrenzung und Fixierung der Beweglichkeit der Profilschiene eingesetzt werden, auch als Anschlagskanten bezeichnet.

Die Profilschiene, die auch als Schiene bezeichnet wird, sollte hierbei an der geschliffenen Fläche, also der Ausrichtungsfläche des Basisbauteils anliegen, da sonst die Gefahr besteht, dass die notwendige Ablaufgenauigkeit sowie eine gegebenenfalls herrschende Vorspannung nicht gewährleistet werden können.

Konventionell wird hierbei die Schiene von Hand an die entsprechende Ausrichtungsfläche des Basisbauteils angedrückt oder mit Hilfe mehrerer Parallelschraubzwingen mechanisch an dieser fixiert. Beim Andrücken von Hand besteht so die Gefahr, dass die Schiene aufgrund seiner nicht ausreichend oder zu ungenau angewendeten Kraft nicht richtig angedrückt wird. Ebenso besteht die Gefahr, dass sich der betreffende Monteur an den häufig scharfkantig bzw. geschliffen ausgeführten Flächen und ihren Kanten verletzt. Ebenso kann die Profilschiene im Falle einer Ausfertigung aus einem korrodierenden Material, also beispielsweise aus einem Stahl oder sogar einem Edelstahl, beschädigt werden, indem Schweiß gegebenenfalls lokal auf die Profilschiene aufgebracht wird, was dort zu Korrosion führen kann. Wenn die Schiene verdreht ist, wobei bereits Torsionen im Mikrometerbereich ausreichen können, besteht so kaum eine Möglichkeit, die Schiene richtig anzulegen.

Das Andrücken der Profilschiene an das Basisbauteil mit Hilfe von Parallelschraubzwingen führt zwar zu einer im Allgemeinen richtigen und ausreichenden Anpressung, ist jedoch deutlich schwieriger und zeitaufwändiger, bevor die Schiene an dem Basisbauteil befestigt werden kann. Neben dem gesteigerten zeitlichen Aufwand besteht darüber hinaus bei diesem Vorgehen auch die Gefahr, eine Oberfläche der Profilschiene oder des Basisbauteils und damit gegebenenfalls eine Laufbahn der Profilschiene und/oder eine sichtbare Außenkante des Systems zu beschädigen.

Zusammenfassend ermöglicht so die Verwendung von Parallelschraubzwingen zwar ein ausreichendes Andrücken der Profilschiene an das Basisbauteil, ist jedoch zeitaufwändig und es besteht die Gefahr, die Profilschiene und/oder das Basisbauteil zu beschädigen. Das Andrücken von Hand ist für den betreffenden Monteur schmerzhaft und setzt außerdem die Profilschiene und/oder das Basisbauteil einer Korrosionsgefahr aus.

Ausgehend hiervon besteht daher ein Bedarf, ein Verfahren zum Herstellen eines Linearsystems mit einer auf einem Basisbauteil befestigten Profilschiene zu verbessern. Ebenso besteht ein Bedarf daran, ein Kombinationsprodukt eines Linearschienensystems zu schaffen, welches eine Montage desselben erleichtert.

Diesen Bedürfnissen trägt ein Verfahren zum Herstellen einen Linearschienensystems gemäß Patentanspruch 1 und ein Kombinationsprodukt eines Linearschienensystems gemäß Patentanspruch 8 Rechnung.

Ein Verfahren zum Herstellen eines Linearschienensystems mit einer auf einem Basisbauteil befestigten Profilschiene gemäß einem Ausführungsbeispiel umfasst ein Vorjustieren der Profilschiene auf dem Basisbauteil derart, dass eine Ausrichtungsfläche des Basisbauteils und eine Ausrichtungsfläche der Profilschiene einander zugewandt sind oder miteinander in Kontakt stehen. Es umfasst ferner ein Bewirken einer Kraft zwischen dem Basisbauteil und der Profilschiene mit Hilfe eines Exzenterhebels derart, dass die Ausrichtungsflächen des Basisbauteils und der Profilschiene aufeinander gepresst werden, und ein Befestigen der Profilschiene auf dem Basisbauteil.

Ein Kombinationsprodukt eines Linearschienensystems gemäß einem Ausführungsbeispiel umfasst eine Profilschiene mit einer Ausrichtungsfläche und einer Anpressfläche, sowie ein Basisbauteil mit einer Montagefläche und einer Ausrichtungsfläche, wobei die Montagefläche ausgebildet ist, sodass die Profilschiene auf dieser angeordnet werden kann, und die beiden Ausrichtungsflächen der Profilschiene und des Basisbauteils miteinander in Kontakt bringbar sind. Es umfasst ferner einen Exzenterhebel, der einen Anpresskörper, einen Hebel und eine Achse umfasst, wobei der Hebel und der Anpresskörper verdrehfest miteinander verbunden sind, wobei der Exzenterhebel ausgebildet ist, um mit der Profilschiene oder dem Basisbauteil drehbar verbindbar zu sein, wobei der Anpresskörper ausgebildet ist, um in einer ersten Verdrehposition im Wesentlichen keine Kraft zwischen dem Basisbauteil und der Profilschiene zu bewirken, und wobei der Anpresskörper ferner ausgebildet ist, um in einer zweiten Verdrehposition eine Kraft zwischen dem Basisbauteil und der Profilschiene derart zu bewirken, dass die Ausrichtungsflächen der Profilschiene und das Basisbauteils aneinander gepresst werden.

Einem Ausführungsbeispiel eines Verfahrens zum Herstellen eines Linearschienensystems liegt so die Erkenntnis zugrunde, dass die Herstellung dadurch vereinfacht werden kann, indem mit Hilfe eines Exzenterhebels eine Kraft zwischen dem Basisbauteil und der Profilschiene derart bewirkt wird, dass die Ausrichtungsflächen des Basisbauteils und der Profilschiene aufeinander gepresst werden. Durch den Einsatz eines Exzenterhebels kann so ein gleichmäßigeres Andrücken ermöglicht werden, das ein ausreichend starkes bzw. ausreichend kräftiges Andrücken mit wenig Kraftaufwand ermöglicht. Auch kann ein Exzenterhebel schneller mit der Profilschiene oder dem Basisbauteil verbunden werden, sodass eine schnellere Montage im Vergleich zur Verwendung von Parallelschraubzwingen möglich ist.

Selbstverständlich kann ein Ausführungsbeispiel eines Verfahrens zum Herstellen eines Linearschienensystems ebenso ein Entfernen des Exzenterhebels nach dem Bewirken der Kraft und/oder nach dem Befestigen der Profilschiene auf dem Basisbauteil umfassen. Hierdurch ist es möglich, den Exzenterhebel tatsächlich als Werkzeug, also als Hilfsvorrichtung für die Montage von Profilschienen und Präzisionsschienen bei Positionierungssystemen und Schienensystemen einzusetzen. Der Exzenterhebel muss so nicht als integraler Bestandteil des Linearschienensystems an oder in diesem verbleiben.

Bei einem Ausführungsbeispiel eines Verfahrens zum Herstellen eines Linearschienensystems kann das Bewirken der Kraft ein verdrehbares Befestigen des Exzenterhebels an der Profilschiene oder dem Basisbauteil umfassen, sodass der Exzenterhebel um eine Achse des Exzenterhebels verdrehbar ist. Ergänzend oder alternativ kann bei einem Ausführungsbeispiel eines Verfahrens zum Herstellen eines Linearschienensystems das Bewirken der Kraft ein Verdrehen des Exzenterhebels von einer ersten Verdrehposition in eine zweite Verdrehposition umfassen, wobei der Exzenterhebel einen Anpresskörper, einen Hebel und eine Achse umfasst. Der Hebel und der Anpresskörper können in diesem Fall verdrehfest miteinander verbunden sein, wobei der Anpresskörper ausgebildet sein kann, um in der ersten Verdrehposition im Wesentlichen keine Kraft zwischen dem Basisbauteil und der Profilschiene zu bewirken, während er ferner ausgebildet sein kann, um in der zweiten Verdrehposition die Kraft zwischen dem Basisbauteil und der Profilschiene zu bewirken. Hierdurch können gegebenenfalls Torsionsfehler der Profilschiene ausgeglichen werden, wenn die Profilschiene beispielsweise verdreht ist, wobei bereits Torsionen im Mikrometerbereich die Möglichkeiten, die Schiene richtig anzulegen, deutlich reduzieren können. Auch kann durch die Verwendung des Hebels gegebenenfalls ein Kraftaufwand reduziert werden, da der Anpresskörper und der Hebel einen physikalischen Hebel bilden, über den eine entsprechende Kraftverstärkung bewirkbar ist, wenn der Bediener den Hebel verwendet, um den Exzenterhebel von der ersten Verdrehposition in die zweite Verdrehposition zu bewegen.

Bei einem Ausführungsbeispiel eines Verfahrens zum Herstellen eines Linearschienensystems kann das Basisbauteil eine Bohrung umfassen, in die die Achse des Exzenterhebels einführbar ist, und bei dem das Bewirken der Kraft zuvor ein Einführen der Achse des Exzenterhebels in die Bohrung umfasst. Durch das Vorsehen wenigstens einer entsprechenden Bohrung kann so das Anpressen gegebenenfalls beschleunigt werden, was zu kürzeren Montagezeiten führen kann.

Bei einem Verfahren gemäß einem Ausführungsbeispiel kann das Befestigen der Profilschiene auf dem Basisbauteil während des Ausübens der Kraft erfolgen. Hierdurch kann die Montagegenauigkeit der Profilschiene auf dem Basisbauteil gegebenenfalls dadurch verbessert werden, indem ein versehentliches Verrutschen der Profilschiene nach dem Ausüben der Kraft ohne Bedeutung bleibt. Ebenso kann gegebenenfalls eine bessere Ausrichtung erfolgen, da durch die Ausübung der Kraft die Ausrichtungsflächen der Profilschiene und des Basisbauteils aufeinander gepresst werden und sich daher in einer definierteren Lage befinden.

Bei einem Verfahren zum Herstellen eines Linearsystems gemäß einem Ausführungsbeispiel kann das Befestigen der Profilschiene das Befestigen an einer ersten Befestigungsposition und ein weiteres Befestigen an einer zweiten Befestigungsposition umfassen, wobei die erste Befestigungsposition von der zweiten Befestigungsposition verschieden ist. So kann eine mechanische Stabilität der Profilschiene auf dem Basisbauteil durch eine Befestigung an gegebenenfalls mehreren Befestigungspositionen weiter gesteigert werden.

Alternativ oder ergänzend kann bei einem Verfahren zum Herstellen eines Linearschienensystems gemäß einem Ausführungsbeispiel das Bewirken der Kraft zwischen dem Basisbauteil und der Profilschiene an einer ersten Position entlang einer Erstreckungsrichtung der Profilschiene erfolgen. Auch kann das Bewirken der Kraft ferner wenigstens ein weiteres Bewirken einer Kraft zwischen dem Basisbauteil und der Profilschiene mit Hilfe des Exzenterhebels oder eines weiteren Exzenterhebels an einer zweiten Position entlang der Erstreckungsrichtung der Profilschiene umfassen, sodass die Ausrichtungsflächen der Basisbauteile und Profilschienen aufeinander gepresst werden. Die zweite Position und die erste Position können hierbei verschieden sein. Es kann also bei einem Ausführungsbeispiel eines Verfahrens zeitgleich oder nacheinander mehrfach eine Kraft zwischen dem Basisbauteil und der Profilschiene bewirkt werden. Im Falle einer nacheinander erfolgenden Ausübung der Kraft kann hierzu gegebenenfalls derselbe Exzenterhebel verwendet werden.

Bei einem Kombinationsprodukt eines Linearschienensystems gemäß einem Ausführungsbeispiel kann der Anpresskörper des Exzenterhebels eine Anpressfläche aufweisen, die ausgebildet ist, um die Kraft zwischen dem Basisbauteil und der Profilschiene zu bewirken, wobei die Anpressfläche in Richtung von der Achse zu der Ausrichtungsfläche des Basisbauteils oder der Profilschiene in der ersten Verdrehposition einen kleineren Abstand als in der zweiten Verdrehposition aufweist. Hierdurch kann der Exzenterhebel in der ersten Verdrehposition im Wesentlichen kraftfrei mit dem Basisbauteil oder der Profilschiene verbunden werden, während durch ein Verdrehen des Exzenterhebels von der ersten in die zweite Verdrehposition die Kraft zwischen der Profilschiene und dem Basisbauteil bewirkt werden kann.

Bei einem solchen Kombinationsprodukt gemäß einem Ausführungsbeispiel kann der Abstand von der ersten Verdrehposition ausgehend in die zweite Verdrehposition kontinuierlich anwachsen. Hierdurch kann es gegebenenfalls möglich sein, bei einer entsprechenden elastischen Ausgestaltung des Anpresskörpers, wenn also dieser beispielsweise aus einem elastischen Material gefertigt ist, die Kraft kontinuierlich zu erhöhen. Ebenso kann es hierdurch möglich sein, den Exzenterhebel an mehreren Positionen und/oder im Zusammenhang mit mehreren Profilschienen und/oder Basisbauteilen zu verwenden. Es kann also hierdurch gegebenenfalls eine Flexibilität des Kombinationsprodukts gemäß einem Ausführungsbeispiel erhöht werden. Als elastisches Material kommen grundsätzlich alle Materialien in Frage, die eine ausreichende Belastbarkeit und trotzdem eine entsprechende Formstabilität aufweisen, sodass die benötigten Kräfte zwischen der Profilschiene und dem Basisbauteil bewirkt werden können.

Bei einem Kombinationsprodukt eines Linearschienensystems gemäß einem Ausführungsbeispiel kann der Anpresskörper des Exzenterhebels eine Anpressfläche aufweisen, die ausgebildet ist, um die Kraft zwischen dem Basisbauteil und der Profilschiene zu bewirken und bei dem die Anpressfläche des Anpresskörpers einen Kunststoff, beispielsweise Polytetrafluorethylen (PTFE), umfasst. Hierdurch kann die zuvor beschriebene Elastizität ermöglicht werden. Ebenso kann durch den Einsatz einer Kunststoff aufweisenden Anpressfläche des Anpresskörpers die Gefahr von Beschädigungen der Profilschiene und/oder des Basisbauteils reduziert werden.

Unter einem Linearschienensystem wird hierbei ein System verstanden, welches wenigstens eine Profilschiene und wenigstens ein Basisbauteil umfasst, auf dem die Profilschiene befestigt ist oder befestigt werden kann bzw. soll. Darüber hinaus kann bei anderen Linearschienensystemen ein solches ebenfalls eine Mehrzahl von Profilschienen aufweisen. In einem solchen Fall kann das Basisbauteil eine entsprechende Mehrzahl von Ausrichtungsflächen aufweisen. Die Mehrzahl von Profilschienen kann hierbei so angeordnet sein oder so angeordnet werden sollen, dass diese eine vorbestimmte Orientierung, beispielsweise parallel zu einander, aufweisen.

So zählen beispielsweise zu den Linearsystemen Profilschienenführungstische, Profilschienenschlitten, Positionierungssysteme, Profilschienenführungstische und andere Positioniersysteme bzw. Schienensysteme. Profilschienen umfassen neben Profilschienen beispielsweise auch Präzisionsschienen und Präzisionsprofilschienen. Darüber hinaus kann ein Linearschienensystem gemäß einem Ausführungsbeispiel ferner einen Profilschienenwagen, einen Profilschienenschlitten oder ein anderes Bauteil umfassen, welches ausgebildet ist, um auf der wenigstens einen Profilschiene entlang einer Erstreckungsrichtung derselben bewegbar zu sein. Eine Profilschiene weist hierbei eine Erstreckungsrichtung auf, entlang derer sich wenigstens eine Laufbahn der Profilschiene erstreckt. Die Laufbahnen sind hierbei typischerweise derart ausgebildet, dass Wälzkörper auf diesen abrollen können. Zu diesem Zweck sind sie häufig geschliffen oder weisen eine andere Oberflächenbehandlung auf.

Nachfolgend werden unter Bezugnahme auf die beigefügten Figuren Ausführungsbeispiele näher beschrieben und erläutert.
Fig. 1 zeigt eine Aufsicht auf einen Exzenterhebel gemäß einem Ausführungsbeispiel;
Fig. 2 zeigt eine Seitenansicht des in Fig. 1 gezeigten Exzenterhebels;
Fig. 3 zeigt eine Seitenansicht eines Linearschienensystems gemäß einem Ausführungsbeispiel;
Fig. 4 zeigt eine perspektivische Ansicht eines Basisbauteils des in Fig. 3 gezeigten Linearschienensystems;
Fig. 5 zeigt eine Aufsicht auf das in Fig. 4 gezeigte Basisbauteil;
Fig. 6 zeigt eine perspektivische Darstellung eines weiteren Basisbauteils eines weiteren Linearschienensystems gemäß einem Ausführungsbeispiel;
Fig. 7 zeigt eine schematische Darstellung eines Linearschienensystems gemäß einem Ausführungsbeispiel mit dem in Fig. 6 gezeigten Basisbauteil;
Fig. 8 zeigt eine perspektivische Darstellung eines weiteren Basisbauteils eines Linearschienensystems gemäß einem Ausführungsbeispiel;
Fig. 9 zeigt eine schematische Darstellung des Linearschienensystems gemäß einem Ausführungsbeispiel mit dem in Fig. 8 gezeigten Basisbauteil;
Fig. 10 zeigt eine perspektivische Darstellung eines weiteren Basisbauteils eines Linearschienensystems gemäß einem Ausführungsbeispiel;
Fig. 11 zeigt eine schematische Querschnittsdarstellung des Linearschienensystems gemäß einem Ausführungsbeispiel mit dem in Fig. 10 gezeigten Basisbauteil;
Fig. 12 zeigt eine Querschnittsdarstellung eines weiteren Linearschienensystems gemäß einem Ausführungsbeispiel; und
Fig. 13 zeigt eine Querschnittsdarstellung eines weiteren Linearschienensystems gemäß einem Ausführungsbeispiel.

Im Rahmen der vorliegenden Beschreibung werden zusammenfassende Bezugszeichen für Objekte, Strukturen und andere Komponenten verwendet werden, wenn die betreffende Komponente an sich oder mehrerer entsprechende Komponenten innerhalb eines Ausführungsbeispiels oder innerhalb mehrerer Ausführungsbeispiele beschrieben werden. Passagen der Beschreibung, die sich auf eine Komponente beziehen, sind daher auch auf andere Komponenten in anderen Ausführungsbeispielen übertragbar, soweit dies nicht explizit ausgeschlossen ist oder sich dies aus dem Zusammenhang ergibt. Werden einzelne Komponenten bezeichnet, werden individuelle Bezugszeichen verwendet, die auf den entsprechenden zusammenfassenden Bezugszeichen basieren. Bei der nachfolgenden Beschreibung von Ausführungsformen bezeichnen daher gleiche Bezugszeichen gleiche oder vergleichbare Komponenten.

Komponenten, die mehrfach in einem Ausführungsbeispiel oder in unterschiedlichen Ausführungsbeispielen auftreten, können hierbei bezüglich einiger ihrer technischen Parameter identisch und/oder unterschiedlich ausgeführt oder implementiert werden. Es ist so beispielsweise möglich, dass mehrere Komponenten innerhalb eines Ausführungsbeispiels bezüglich eines Parameters identisch, bezüglich eines anderen Parameters jedoch unterschiedlich ausgeführt sein können.

Wie eingangs bereits kurz erläutert wurde, wird bei der Montage von Profilschienen oder auch Präzisionsschienen, welche ebenfalls als Profilschienen bezeichnet werden, diese an geschliffene Flächen, die so genannten Ausrichtungsflächen, eines oder mehrerer Basisbauteile angelegt und angedrückt. Die Ausrichtungsflächen dienen hierbei zur Begrenzung der mechanischen Beweglichkeit der Profilschienen, weshalb diese auch als Anschlagkanten bezeichnet werden.

Das Andrücken bzw. Anpressen der Profilschiene an die Ausrichtungsfläche des Basisbauteils ist bei vielen Systemen notwendig, damit die Ablaufgenauigkeit der Profilschiene gewährleistet wird und während des Betriebs eine gegebenenfalls vorhandene Vorspannung und/oder eine Ausrichtung im spezifizierten oder zuvor eingestellten Bereich bleibt und sich möglichst nicht verändert. Konventionell geschieht das Andrücken von Hand oder mit Parallelschraubzwingen.

Gemäß einem Ausführungsbeispiel eines Verfahrens zum Herstellen eines Linearschienensystems mit wenigstens einer auf einem Basisbauteil befestigten Profilschiene umfasst so zunächst ein Vorjustieren der Profilschiene auf dem Basisbauteil derart, dass eine Ausrichtungsfläche des Basisbauteils und eine Ausrichtungsfläche der Profilschiene einander zugewandt sind oder miteinander in Kontakt stehen. Anschließend wird mit Hilfe eines Exzenterhebels eine Kraft zwischen dem Basisbauteil und der Profilschiene derart bewirkt, dass die Ausrichtungsflächen des Basisbauteils und der Profilschiene aufeinander gepresst werden. Zeitgleich oder anschließend wird dann die Profilschiene auf dem Basisbauteil befestigt. Der verwendete Exzenterhebel kann hierbei als Werkzeug oder als Hilfsvorrichtung für die Montage optional entfernt werden. Bei anderen Ausführungsbeispielen kann dieser auch als Teil des Linearschienensystems verbleiben.

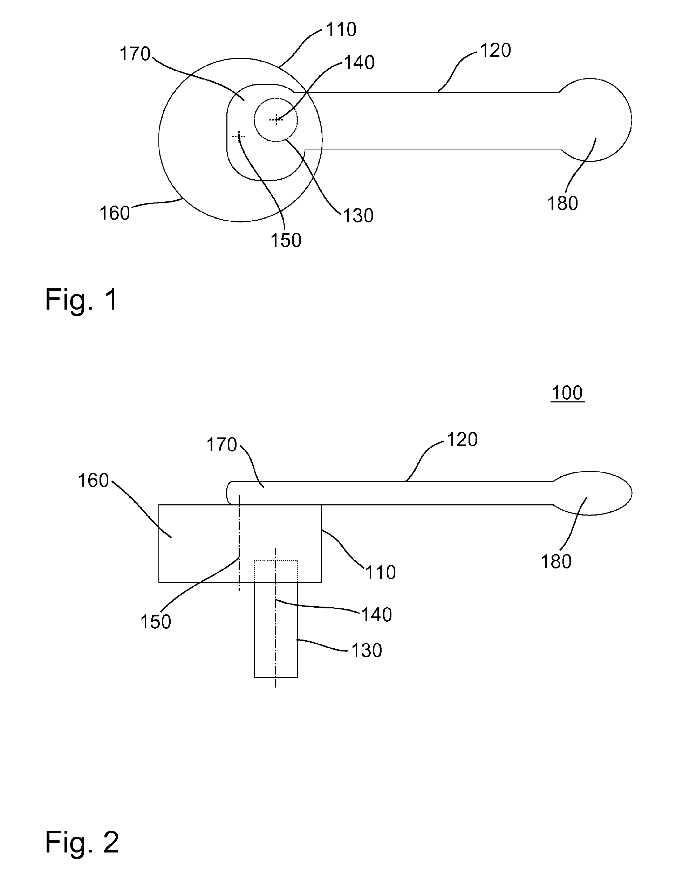

Fig. 1 zeigt eine Aufsicht auf einen entsprechenden Exzenterhebel 100, während Fig. 2 eine Seitenansicht des Exzenterhebels 100 aus Fig. 1 zeigt. Der Exzenterhebel 100 umfasst einen Anpresskörper 110, der bei dem in den Fig. 1 und 2 dargestellten Exzenterhebel 100 zylinderförmig ausgestaltet ist. Der Exzenterhebel 100 umfasst ferner einen Hebel 120, der mit dem Anpresskörper 110 drehfest verbunden und ausgebildet ist, um von einem Benutzer des Exzenterhebels 100, also beispielsweise von einem Monteur eines Linearschienensystems, bedient zu werden.

Der Exzenterhebel 100 umfasst ferner eine Achse 130, die bei dem in Fig. 1 und 2 gezeigten Exzenterhebel 100 mit dem Anpresskörper 110 verbunden ist. Hierbei kann bei unterschiedlichen Ausgestaltungen eines Exzenterhebels 100 die Achse 130 starr, also drehfest mit dem Anpresskörper 110 oder auch mit dem Hebel 120 verbunden sein. In einem solchen Fall würde die Achse 130 bei einer Verdrehung des Exzenterhebels 100 in einer entsprechenden Bohrung oder Führung sich mitdrehen. Bei anderen Exzenterhebeln 100, wie sie im Rahmen von Ausführungsbeispielen zum Einsatz kommen können, kann die Achse 130 auch mit dem Anpresskörper 110 oder dem Hebel 120 drehbar, beispielsweise mit Hilfe eines Wälzlagers oder eines Gleitlagers, verbunden sein.

Bei dem in den Fig. 1 und 2 gezeigten Exzenterhebel 100 dient die Achse 130 ferner als Befestigungsstruktur des Exzenterhebels 100, um diese mit dem Basisbauteil oder der Profilschiene des Linearschienensystems mechanisch verbindbar zu machen. Das entsprechende Gegenbauteil, also das Basisbauteil oder die Profilschiene, weisen typischerweise in einem solchen Fall eine Bohrung auf, in die die Achse 130 einführbar ist. Bei anderen Ausführungsbeispielen kann der Exzenterhebel 100 und/oder die entsprechende Profilschiene oder das entsprechende Basisbauteil jedoch auch mit Hilfe anderer Befestigungsstrukturen zeitweise verbindbar sein. So kann der Exzenterhebel 100 beispielsweise eine mit der Achse 130 verbundene Klemmvorrichtung aufweisen, mit deren Hilfe der Exzenterhebel an der Profilschiene und/oder dem Basisbauteil des Linearschienensystems lösbar verbindbar sein kann.

Die Achse 130 weist eine Symmetrieachse 140 auf, die versetzt zu einer Symmetrieachse des Anpresskörpers 110 angeordnet ist. Hierdurch ist der Anpresskörper 110 in der Lage, in einer ersten Verdrehposition im Wesentlichen keine Kraft zwischen dem Basisbauteil und der Profilschiene zu bewirken, während der Anpresskörper 110 durch ein Verdrehen des Exzenterhebels 100 in eine zweite Verdrehposition in der Lage ist, eine entsprechende Kraft zwischen dem Basisbauteil und der Profilschiene zu bewirken. So weist der Anpresskörper 110 des Exzenterhebels 100 eine Anpressfläche 160 auf, die ausgebildet ist, um die Kraft zwischen dem Basisbauteil und der Profilschiene zu bewirken. Die Anpressfläche weist in der ersten Verdrehposition einen kleineren Abstand in Richtung von der Achse 130 bzw. ihrer Symmetrieachse 140 zu der Ausrichtungsfläche des Basisbauteils oder der Profilschiene als in der zweiten Verdrehposition auf. Bei dem in den Fig. 1 und 2 gezeigten Exzenterhebel 100 ist dies eine Folge der rotationssymmetrischen Ausgestaltung des Anpresskörpers 110 durch seine Zylinderform und die räumlich verschobene Anordnung der beiden Symmetrieachsen 140, 150 der Achse 130 und des Anpresskörpers 110.

Bei anderen Ausführungsbeispielen kann der Exzenterhebel 100 auch anders geformt sein. So kann bei einem abweichenden Exzenterhebel 100 beispielsweise der Anpresskörper eine Ovalform haben, sodass auch bei zusammenfallenden Symmetrieachsen 140, 150 eine entsprechende Veränderung des zuvor beschriebenen Abstands realisierbar ist. Auch kann der Anpresskörper 110 eine andere Form haben, sodass die Anpressfläche 160 bei Überfiihrung des Exzenterhebels 100 von der ersten Verdrehposition in die zweite Verdrehposition den Abstand zwischen der Anpressfläche und der Achse 130 entsprechend verändert.

Der Anpresskörper 110 des Exzenterhebels 100 kann hierbei beispielsweise aus einem Material gefertigt sein, welches eine ausreichende Elastizität aufweist, um beispielsweise Beschädigungen an dem Basisbauteil oder der Profilschiene im Bereich der Ausrichtungsflächen zu unterbinden. So kann der Anpresskörper 110 beispielsweise aus einem Kunststoff, beispielsweise Polytetrafluorethylen (PTFE), gefertigt sein. Bei anderen Ausführungsbeispielen kann der Anpresskörper 110 auch lediglich im Bereich der Anpressfläche 160 eines der zuvor genannten Materialien aufweisen. So kann in einem solchen Fall der Anpresskörper 110 beispielsweise einen aus einem metallischen Werkstoff gefertigten Grundkörper aufweisen, der mit einem entsprechenden Material im Bereich der Anpressfläche 160 belegt ist.

Ein Exzenterhebel 100, wie er in Fig. 1 gezeigt ist, kann hierbei einteilig oder mehrteilig ausgeführt sein. So kann der Hebel 120 beispielsweise aus einem metallischen Werkstoff gefertigt sein, während der Anpresskörper 110 aus einem Kunststoff hergestellt wurde. In einem solchen Fall kann der Hebel 120 mit dem Anpresskörper 110 durch eine Verschraubung oder eine andere kraft-, form- oder stoffschlüssige Verbindung fixiert werden. Auch die Achse 130 kann aus einem metallischen Werkstoff oder einem Kunststoff gefertigt sein. Je nach konkreter Ausgestaltung kann auch diese gegebenenfalls mit dem Anpresskörper 110 und/oder dem Hebel 120 im Falle einer mehrteiligen Ausführung des Exzenterhebels 100 verschraubt oder anderweitig verbunden sein. Zu den beispielsweise verwendeten metallischen Werkstoffen für die genannten Komponenten des Exzenterhebels 100 zählen Stahl, beispielsweise ein Edelstahl oder ein Werkzeugstahl, Messing, Aluminium oder andere metallische Legierungen oder Werkstoffe. Zu den verwendbaren Kunststoffen zählen unter anderem Polyamid und Polytetrafluorethylen (PTFE).

Bei dem in den Fig. 1 und 2 gezeigten Exzenterhebel 100 handelt es sich um ein mehrstückig ausgeführtes Exemplar. Um eine mechanische Belastung des Anpresskörpers 110 durch die Verschraubung des Hebels 120 mit diesem auf eine größere Fläche zu verteilen, weist der Hebel 120 im Bereich der Symmetrieachse 140 der Achse 130 einen vergrößerten Abschnitt 170 auf. Darüber hinaus weist der Hebel zur Verbesserung der Handhabbarkeit und zur Unterbindung eines Abrutschens entlang einer Erstreckungsrichtung des Hebels 120 an einem dem Anpresskörper 110 abgewandten Ende eine Verdickung auf. Hierdurch wird ein Abrutschen der Hand des Bedieners des Exzenterhebels unterbunden, zumindest jedoch erschwert.

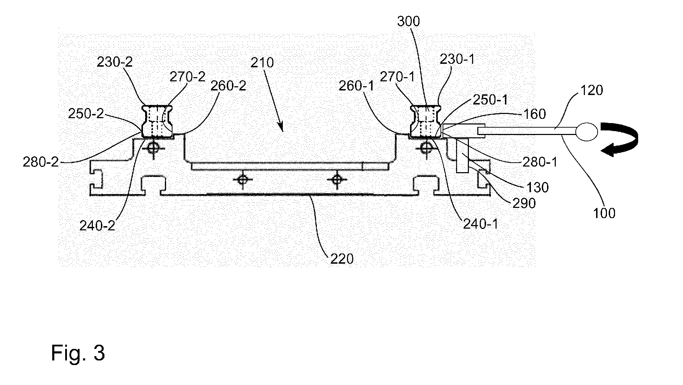

Wie nachfolgend im Zusammenhang mit den Fig. 3 bis 13 an verschiedenen Profilschienensystemen gezeigt werden wird, ermöglicht ein Exzenterhebel 100 so ein Andrücken der Schiene an das Basisbauteil bzw. ein entsprechendes Andrücken des Basisbauteils an die Profilschiene. Dies kann vor dem Befestigen der Profilschiene an dem Basisbauteil durchgeführt werden. Je nach konkreter Ausgestaltung des Basisbauteils, der Profilschiene und/oder des Exzenterhebels 100 kann es hierbei ratsam sein, verschiedene Exzenterhebel 100 für verschiedene Typen und/oder Größen von Profilschienen bzw. Basisbauteilen, also unterschiedlichen Linearschienensystemen einzusetzen. So kann es ratsam sein, den Exzenterhebel 100 auf die Geometrie der betreffenden Basisbauteile bzw. der betreffenden Profilschienen anzupassen. Es kann jedoch auch möglich sein, einen Exzenterhebel 100 derart zu konstruieren, dass dieser für eine größere Anzahl unterschiedlicher Linearschienensysteme einsetzbar ist. Wie im nachfolgenden noch erörtert wird, kann dies beispielsweise dadurch geschehen, dass Bohrungen für die Achse 130 in dem Basisbauteil bzw. der Profilschiene entsprechend positioniert werden.

Ein Exzenterhebel 100, wie er beispielsweise in den Fig. 1 und 2 gezeigt ist, stellt so eine Hilfsvorrichtung für Profil- bzw. Präzisionsschienen dar, die ein richtiges Anlegen und Befestigen derselben bei Positioniersystemen oder anderen Linearschienensystemen ermöglichen.

Fig. 3 zeigt eine Frontansicht eines Kombinationsprodukts 200 eines Linearschienensystems 210 gemäß einem Ausführungsbeispiel. Das Linearschienensystem 210 ist das LTB-System der SKF. Allerdings, wie die nachfolgende Beschreibung zeigen wird, sind Ausführungsbeispiele weder auf dieses spezielle Modell, noch auf Systeme der SKF beschränkt.

Das Linearschienensystem umfasst ein Basisbauteil 220 mit zwei Profilschienen 230-1 und 230-2. Das Basisbauteil 220 weist für die beiden Profilschienen 230-1, 230-2 jeweils eine Montagefläche 240-1 und 240-2 auf, auf die die Profilschienen 230 jeweils mit einer ihrer Montageflächen 250-1 bzw. 250-2 auflegbar und befestigbar sind. Darüber hinaus weist das Basisbauteil 220 jeweils eine Ausrichtungsfläche 260-1 für die Profilschiene 230-1 und eine Ausrichtungsfläche 260-2 für die Profilschiene 230-2 auf. Die Ausrichtungsflächen 260 erstrecken sich hier im Wesentlichen senkrecht zu den beiden Montageflächen 240 des Basisbauteils 220 und bilden so Anschlagskanten oder Anschlagsflächen für die Profilschienen 230. Auch die Profilschienen 270 weisen entsprechende Ausrichtungsflächen 270 auf, die derart an den Profilschienen 230 angeordnet sind, dass die Ausrichtungsflächen 270 den Ausrichtungsflächen 260 des Basisbauteils 220 gegenüberliegen und diesem zugewandt sind, wenn die Montageflächen 240, 250 des Basisbauteils und der Profilschienen 230 miteinander in Kontakt stehen.

Der Ausrichtungsfläche 270-1 gegenüberliegend weisen die Profilschienen 230 ferner eine Anpressfläche 280-1 bzw. 280-2 auf. Die Anpressfläche 280 ist derart angeordnet, dass bei einem Einsetzen des Exzenterhebels 100 bzw. seiner Achse 130 in eine entsprechende Aufnahmebohrung bzw. Bohrung 290 die Anpressfläche 160 des Exzenterhebels 100 der Anpressfläche 280 der betreffenden Profilschiene 230 gegenüberliegt.

Die Profilschiene 230 kann nun durch ein Drehen oder Verdrehen des Hebels 120 bzw. durch ein entsprechendes Verdrehen des Exzenterhebels 100 an das Basisbauteil angedrückt werden. Zur Befestigung der Profilschienen 230 weisen diese Bohrungen 300 auf, in die Schrauben (nicht gezeigt in Fig. 3) einführbar sind, die in entsprechende, ebenfalls in Fig. 3 nicht gezeigte, Gewindelöcher des Basisbauteils 220 eingreifen. Die Bohrungen 300 der Profilschienen 230 sind hierbei derart ausgelegt, dass diese den Gewindebohrungen 310 im montierten Zustand der Profilschienen gegenüberliegen.

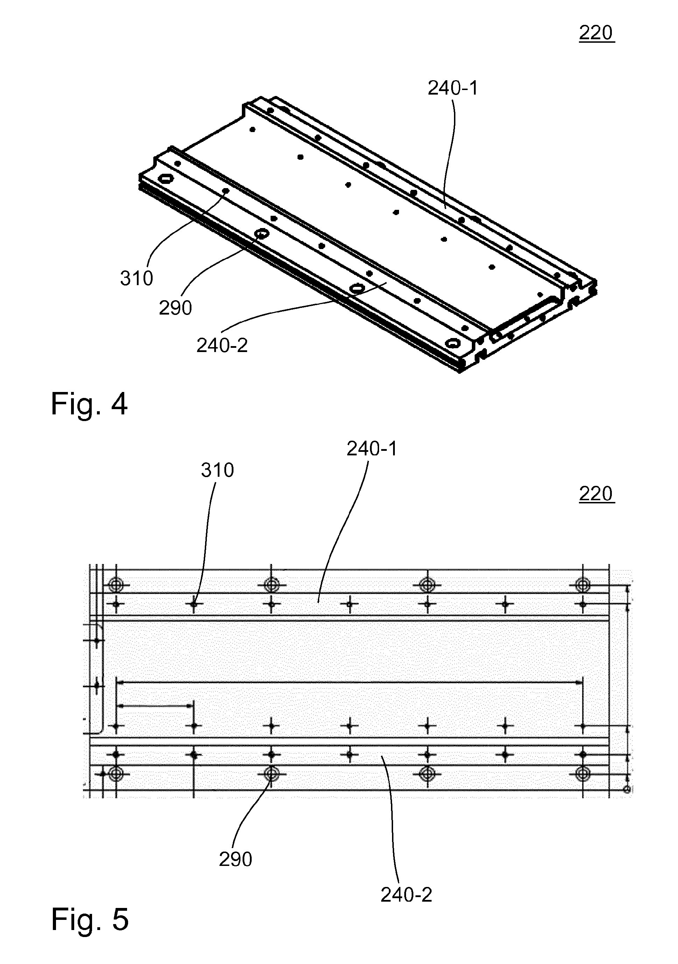

Die Fig. 4 und 5 zeigen das Basisbauteil 220 als perspektivische Darstellung und als Aufsicht. Das Basisbauteil 220 weist im Bereich der Montageflächen 240-1, 240-2 für die beiden in den Fig. 4 und 5 nicht gezeigten Profilschienen 230 eine Mehrzahl von Gewindebohrungen 310 auf, mit deren Hilfe die Profilschienen 230 mit dem Basisbauteil nach oder während des Andrückens mit Hilfe des Exzenterhebels 100 (nicht gezeigt in den Fig. 4 und 5) verschraubt bzw. befestigt werden können. Hierdurch ist es möglich, die Profilschienen 230 nicht nur an einer Befestigungsposition, sondern an mehreren Befestigungspositionen mit dem Basisbauteil zu verbinden. Anders ausgedrückt kann hier das Befestigen der Profilschiene an dem Basisbauteil nicht nur ein Befestigen einer ersten Befestigungsposition, sondern auch ein weiteres Befestigen an einer zweiten Befestigungsposition umfassen, die von der ersten Befestigungsposition verschieden ist. Die Befestigungspositionen sind hierbei durch die Orte der Gewindebohrungen 310 gegeben.

Darüber hinaus weist das Basisbauteil 220 eine Mehrzahl von Bohrungen 290 auf, mit deren Hilfe an verschiedenen Positionen entlang der Erstreckungsrichtung der Profilschiene eine Kraft zwischen Profilschiene und Basisbauteil bewirkt werden kann. So kann die Kraft nicht nur an einer ersten Position, sondern auch an einer zweiten Position bewirkt werden, die von der ersten Position verschieden ist. Wird hierbei an der ersten und der zweiten Position zeitgleich die Kraft bewirkt, kann dies bedeuten, dass es hilfreich ist, einen weiteren Exzenterhebel 100 einzusetzen. Ist hingegen eine zeitlich nacheinander durchgeführte Bewirkung der Kraft möglich, können diese Kräfte mit Hilfe des gleichen Exzenterhebels nacheinander bewirkt werden.

Bei den Bohrungen 290 kann es sich um bereits vorhandene Bohrungen, beispielsweise zur Befestigung des Basisbauteils 220 an einem anderen Bauteil oder aber auch um zusätzliche Bohrungen handeln. Im Falle von zusätzlichen Bohrungen können diese gegebenenfalls als gewindelose Sackbohrungen ausgeführt sein.

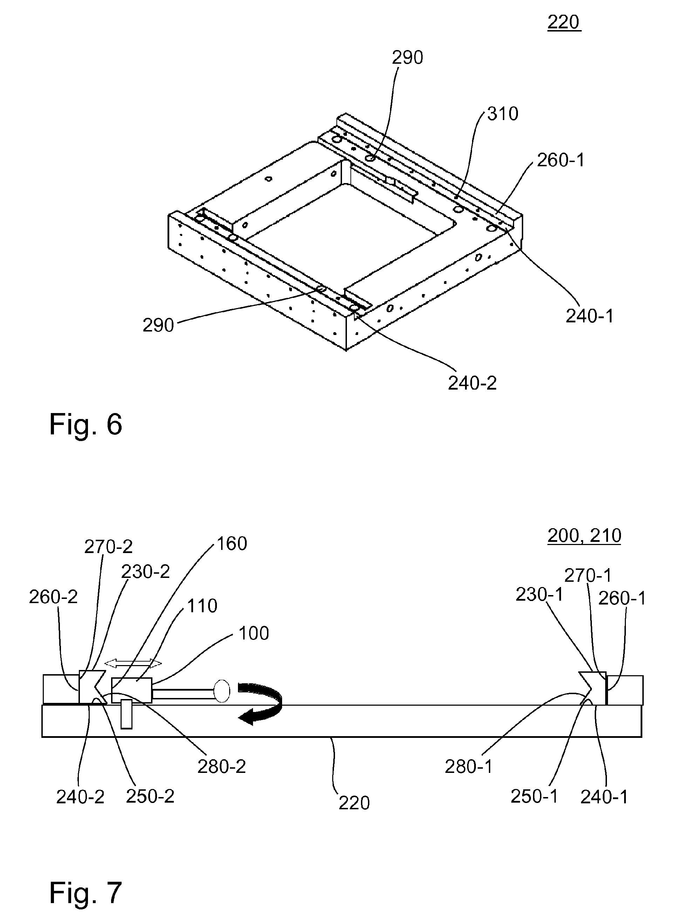

Fig. 6 zeigt eine perspektivische Ansicht eines weiteren Basisbauteils 220 des TLM-Systems. Genauer gesagt handelt es sich bei dem Basisbauteil 220 aus Fig. 6 um ein Unterteil bzw. Oberteil des betreffenden Systems. Das Basisbauteil 220 ist auch hier ausgelegt für zwei Profilschienen 230, die in Fig. 6 nicht eingezeichnet sind. So weist auch dieses Basisbauteil 220 zwei Montageflächen 240-1 und 240-2 auf. Ebenso weist das Basisbauteil 220 zwei Ausrichtungsflächen 260, von denen jedoch nur eine, nämlich die Ausrichtungsfläche 260-1, aufgrund der gewählten perspektivischen Darstellung sichtbar ist. Zur Befestigung der Profilschiene 230 ist in den Montageflächen 240 eine Mehrzahl von Gewindebohrungen 310 vorgesehen. Darüber hinaus umfasst auch dieses Basisbauteil eine Mehrzahl von Bohrungen 290 zur Aufnahme des Exzenterhebels 100.

Fig. 7 zeigt das Kombinationsprodukt 200 bzw. das Linearsystem 210 mit dem bereits in Fig. 6 gezeigten Basisbauteil 220. Auch bei diesem Basisbauteil werden die beiden Profilschienen 230-1, 230-2 jeweils mit ihren Montageflächen 250-1, 250-2 auf die Montageflächen 240-1, 240-2 des Basisbauteils aufgebracht und mit ihren Ausrichtflächen 270 an den Ausrichtflächen 260 des Basisbauteils vorjustiert. Mit Hilfe des in Fig. 7 gezeigten Exzenterhebels 100 kann dann wiederum eine Kraft zwischen den Profilschienen 230 und dem Basisbauteil 220 in der beschriebenen Art und Weise durch ein Verschwenken des Exzenterhebels 100 bewirkt werden.

Im Unterschied zu dem in den Fig. 3 bis 5 gezeigten Linearschienensystem 210 ist hier jedoch die Profilschiene 230 derart angeordnet, dass die Anpressfläche 160 des Anpresskörpers 110 des Exzenterhebels 100 gegen eine Laufbahn der betreffenden Profilschiene 230 gedrückt wird. Die Anpressfläche 280 der Profilschienen 230 stimmt daher hier mit den Laufbahnen derselben überein.

Gerade bei einer solchen Konstellation kann es daher besonders ratsam sein, einen Anpresskörper 110 zu verwenden, der eine Beschädigung der Anpressfläche 280 und damit der Lauffläche der Profilschiene 230 unwahrscheinlich macht bzw. verhindert. Ein solcher Anpresskörper kann, wie zuvor beschrieben wurde, beispielsweise aus einem Kunststoff gefertigt sein oder einen solchen zumindest im Bereich der Anpressfläche 160 aufweisen.

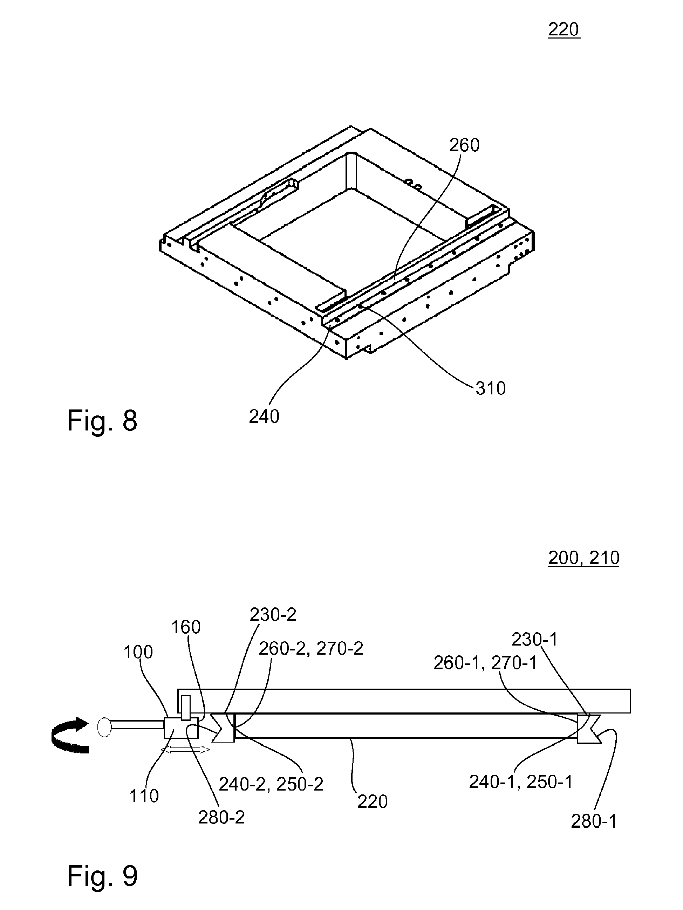

Fig. 8 zeigt eine perspektivische Darstellung eines weiteren Basisbauteils 220 eines Linearschienensystems 210. Bei dem Linearschienensystem 210 handelt es sich wiederum um das TLM-System. Das in Fig. 8 gezeigte Basisbauteil 220 ist das Mittelteil, welches zwischen ein in Fig. 7 und 8 gezeigtes Unterteil und einem entsprechend baugleich ausgeführten Oberteil zum Einsatz kommt. Auch dieses Basisbauteil 220 ist ausgelegt für den Einsatz mit Hilfe von zwei Profilschienen 230, die jedoch in Fig. 8 nicht gezeigt sind. Entsprechend weist auch dieses Basisbauteil 220 zwei Montageflächen 240 mit entsprechenden Gewindebohrungen 310 und entsprechenden Ausrichtungsflächen 260 auf.

Fig. 9 zeigt eine Fig. 7 ähnliche Darstellung des zugehörigen Linearschienensystems 210 bzw. des entsprechenden Kombinationsprodukts 200. Im Unterschied zu dem Unterteil bzw. Oberteil aus den Fig. 6 und 7 liegen die Profilschienen 230 des Mittelteils aus den Fig. 8 und 9 im montierten Zustand den Profilschienen des Oberteils und des Unterteils gegenüber. Entsprechend sind die Ausrichtungsflächen 260, 270 in diesem Fall bezogen auf das Basisbauteil 220 orientiert. Darüber hinaus ergeben sich kaum Änderungen im Vergleich zu dem im Zusammenhang mit den Fig. 6 und 7 beschriebenen, weshalb an dieser Stelle darauf verwiesen wird.

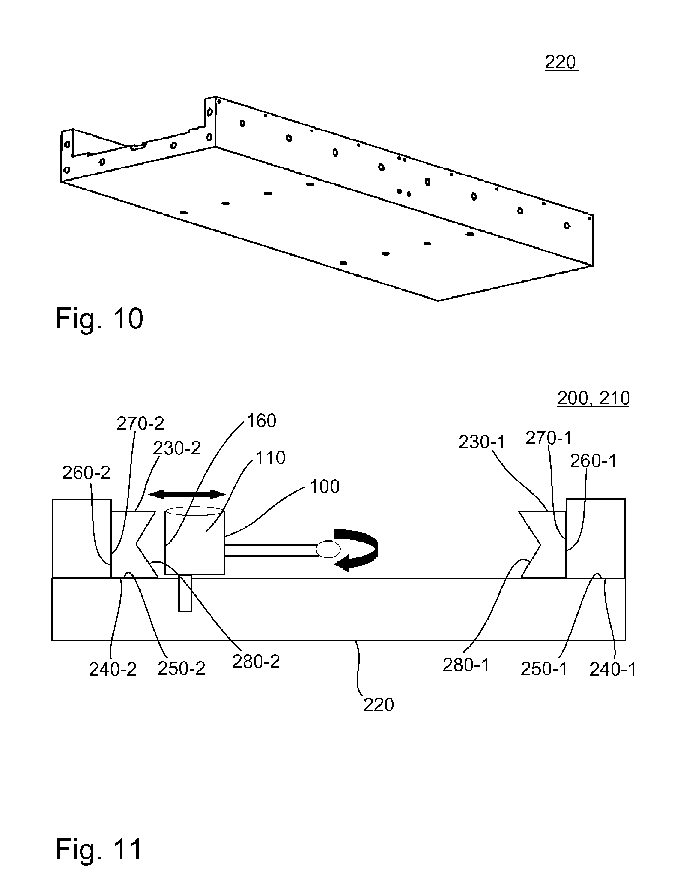

Fig. 10 zeigt ein weiteres Basisbauteil 220 eines Linearschienensystems 210, bei dem es sich um das RSS/NSAS-System handelt. Genauer gesagt ist in Fig. 10 das Oberteil des betreffenden Linearschienensystems gezeigt.

Fig. 11 zeigt eine entsprechende Querschnittsdarstellung des Linearsystems 210 bzw. des entsprechenden Kombinationsprodukts gemäß einem Ausführungsbeispiel. Auch das Linearsystem 210, wie es in Fig. 11 im Querschnitt gezeigt ist, weist zwei Profilschienen 230-1, 230-2 auf. Auch bei diesem ist die Anpressfläche 280 der Profilschiene 230 eine Lauffläche der betreffenden Profilschiene. Ansonsten unterscheidet sich das in Fig. 11 gezeigte Linearschienensystem lediglich hinsichtlich konstruktiver Details von dem zuvor beschriebenen. Aus diesem Grund wird auf die Beschreibung der vorangegangenen Ausführungsbeispiele verwiesen.

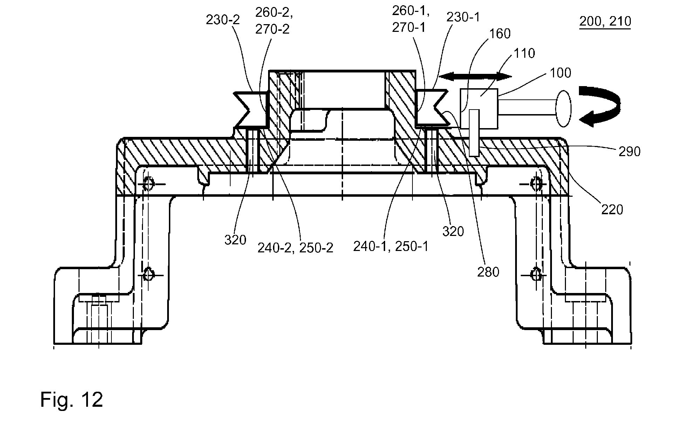

Fig. 12 zeigt ein weiteres Kombinationsprodukt 200 gemäß einem Ausführungsbeispiel eines Linearschienensystems 210 auf Basis des Philips Genius-Systems. So weist auch dieses Linearschienensystem ein Basisbauteil auf, welches ebenfalls ausgebildet ist, um zwei Profilschienen 230-1, 230-2 an entsprechenden Montageflächen 240-1, 240-2 aufzunehmen. Ebenfalls weist dieses Basisbauteil 220 wiederum zwei Ausrichtungsflächen 260-1, 260-2 auf, die im Wesentlichen senkrecht zu den Montageflächen 240 angeordnet sind. In dem vorjustierten bzw. montierten Zustand liegen so die Profilschienen 230 mit ihren Montageflächen 250 auf den Montageflächen 240 des Basisbauteils 220 sowie mit ihren Ausrichtungsflächen 270 an den entsprechenden Ausrichtungsflächen 260 der Profilschiene an. Gegebenenfalls sind im vormontierten Zustand die Ausrichtungsflächen 270 der Profilschienen 230 den entsprechenden Ausrichtungsflächen 260 des Basisbauteils 220 zugewandt.

Auch dieses Basisbauteil 220 weist eine entsprechende Bohrung 290 zur Aufnahme des Exzenterhebels 100 auf. Auch bei diesem Basisbauteil ist die Anpressfläche 280 der Profilschiene 230 eine Laufbahn der betreffenden Profilschiene, sodass die Anpressfläche 110 des Anpresskörpers 110 des Exzenterhebels 100 auch in diesem Fall aus einem Material bestehen sollte, welches eine Beschädigung der Laufbahnen unwahrscheinlich macht bzw. unterbindet.

Im Unterschied zu den bisher beschriebenen Basisbauteilen weist jedoch dieses Basisbauteil im Bereich der Montageflächen 240 eine Mehrzahl von Bohrungen 320 auf, mit deren Hilfe die Profilschienen 230 mit dem Basisbauteil verschraubt werden können. Die Profilschienen 230 dieses Linearschienensystems 210 sind Präzisionsschienen.

Wie die vorangegangenen Erörterungen gezeigt haben, sind Ausführungsbeispiele eines Verfahrens zum Herstellen eines Linearschienensystems 210 auf eine Vielzahl von Positionierungssystemen unterschiedlichster Hersteller anwendbar. Sie sind daher in keinster Weise auf die Erfordernisse eines Herstellers oder eines bestimmten Positionierungssystems eines Herstellers zugeschnitten. Es kann allerdings ratsam sein, die verwendeten Exzenterhebel 100 an die entsprechenden Rahmenbedingungen der Positioniersysteme anzupassen.

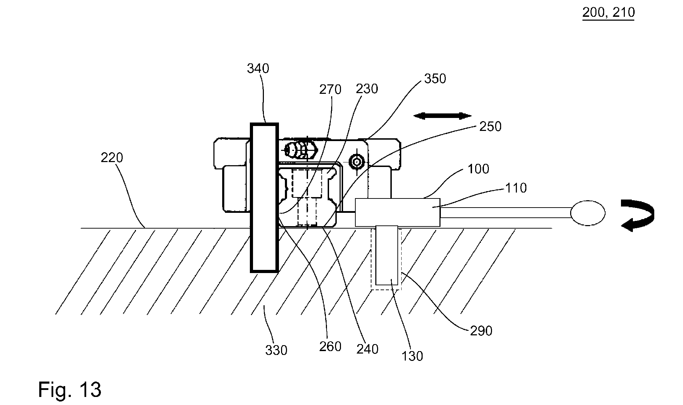

Fig. 13 zeigt ein weiteres Kombinationsprodukt 200 bzw. Linearschienensystem 210. Bei diesem System handelt es sich um ein solches, bei dem das Basisbauteil 220 zweiteilig ausgeführt ist. Das Basisbauteil 220 weist so eine Basisplatte 330 und ein Anschlagsbauteil 340 auf. Beide sind in einem Bereich, der außerhalb der in Fig. 13 dargestellten Querschnittsebene liegt, miteinander mechanisch verbunden. Das Anschlagsbauteil 340 bildet zumindest abschnittsweise die Ausrichtungsfläche 260 des Basisbauteils 220. Entsprechend ist benachbart im Bereich der Basisplatte 330 die Montagefläche 240 des Basisbauteils 220 angeordnet.

Eine Profilschiene 230 kann nun, wie bereits zuvor beschrieben wurde, derart auf dem Basisbauteil 220, also auf der Basisplatte 330, angeordnet werden, dass die Montagefläche 250 der Profilschiene auf der Montagefläche 240 des Basisbauteils 220 liegt und die Ausrichtungsfläche 270 der Profilschiene 230 in Kontakt mit der Ausrichtungsfläche 260 des Basisbauteils 220 steht. Selbstverständlich kann im Rahmen der Vorjustage die Ausrichtungsfläche 270 der Profilschienen 230 auch lediglich der Ausrichtungsfläche 260 des Basisbauteils 220 zugewandt sein. Die Basisplatte 330 weist ferner die bereits zuvor erwähnte Bohrung 290 zur Aufnahme der Achse 130 des Exzenterhebels 100 auf.

Fig. 13 zeigt ein Linearschienensystem 210, welches ferner einen Profilschienen- oder Führungswagen 350 aufweist. Je nach konkreter Implementierung kann hierbei der Exzenterhebel 100 zusammen mit der Bohrung 290 dahingehend ausgelegt werden, dass diese direkt eine Kraft auf die Profilschiene 230 ausüben oder aber vermittelt durch den Profilschienenwagen bzw. Führungswagen 350. In diesem Zusammenhang sollte darauf hingewiesen werden, dass in Fig. 13 eine Schnittebene gezeigt ist, in der die Wälzkörper zwischen dem Führungswagen 350 und der Profilschiene 230 nicht zu sehen sind.

Anders ausgedrückt kann die Kraft zwischen dem Basisbauteil 220 und der Profilschiene 230 mittelbar oder unmittelbar bewirkt werden, wobei bei einer mittelbaren Bewirkung ein weiteres Bauteil, also beispielsweise der Führungswagen 350, zur Kraftübertragung herangezogen werden kann.

Ausführungsbeispiele sind selbstverständlich nicht auf Linearschienensysteme 210 oder Kombinationsprodukte 200 beschränkt, bei denen eine oder zwei Profilschienen 230 implementiert sind. Grundsätzlich können diese auch eine beliebige Anzahl von Profilschienen umfassen. Darüber hinaus können bei abweichenden Ausführungsbeispielen auch die Profilschienen 230 ausgebildet sein, um den Exzenterhebel 100 aufzunehmen. Zu diesem Zweck können sie beispielsweise Bohrungen aufweisen, die zur Befestigung der Profilschiene 230 an dem Basisbauteil 220 dienen und zur Ausrichtung bzw. zur Anpressung derselben an das Basisbauteil 220 "zweckentfremdet" werden. Selbstverständlich können sie auch gesonderte Bohrungen oder andere Befestigungsstrukturen aufweisen, die ausgebildet sind, um den Exzenterhebel 100 aufzunehmen.

Ebenso können bei anderen Ausführungsbeispielen selbstverständlich der Exzenterhebel 100 sowie das entsprechende Bauteil, also das Basisbauteil 220 oder die Profilschiene 230, eine entsprechende Befestigungsstruktur aufweisen, sodass der Exzenterhebel 100 mit dem betreffenden Bauteil auch auf andere Art und Weise, beispielsweise über eine Klemmung, verbindbar ist.

Ausführungsbeispiele können es so ermöglichen, dass die Profilschiene bzw. das Basisbauteil aufeinander gleichmäßig angedrückt werden. Auch können sie ein kräftiges Andrücken mit einem vergleichsweise geringen Kraftaufwand ermöglichen. Im Vergleich zu anderen, konventionellen Herstellungsverfahren ermöglichen sie darüber hinaus gegebenenfalls ein schnelles Andrücken. Auch können Torsionsfehler ausgeglichen werden, die bereits im Mikrometerbereich ein Anlegen der Profilschiene mit einer ausreichenden Genauigkeit erheblich gefährden können.

Ausführungsbeispiele sind im Grunde übertragbar auf fast alle Typen und Größen von Linearschienensystemen 210. Es besteht ebenfalls die Möglichkeit, das System als Serviceleistung bei Schienensystemen mit anzubieten, bei denen die betreffende Profilschiene und/oder das betreffende Basisbauteil 220 ausgebildet ist, um mit dem Exzenterhebel 100 mechanisch verbindbar zu sein. Zu diesem Zweck kann das betreffende Bauteil beispielsweise eine Bohrungsreihe aufweisen. Ebenso kann der Profilschiene 230 und dem betreffenden Basisbauteil 220 das Werkzeug, also der Exzenterhebel 100, im Rahmen eines Kombinationsprodukts 200 beiliegen. Daher kann ein Verfahren auch kundenseitig mit Hilfe des mitgelieferten Exzenterhebels 100 durchgeführt werden.

Im Vergleich zu dem konventionellen Anpressen der Profilschiene von Hand reduziert der Einsatz eines Ausführungsbeispiels eines Verfahrens den Kontakt der menschlichen Hand mit der Profilschiene 230, bzw. kann diesen gegebenenfalls vollständig unterbinden, sodass die Gefahr von Handschweiß-Korrosion deutlich reduzierbar sein kann. So kann mit Hilfe eines Ausführungsbeispiels auch bei größeren Schienen eine schnellere und gegebenenfalls für das Linearschienensystem 210 und dem Monteur problemlosere Vorjustage bzw. Befestigung der Profilschiene 230 auf dem Basisbauteil 220 erzielt werden.

So kann durch den Einsatz eines Ausführungsbeispiels die Kraft zum Andrücken erhöht werden und der Montageprozess für den betreffenden Monteur gegebenenfalls weniger schmerzhaft in den Fingern ausgestaltet werden. Auch kann die recht umständliche und zeitaufwändige Ausrichtung mit Hilfe von Parallelschraubzwingen vermieden werden. Darüber hinaus können Ausführungsbeispiele auch im Falle einer Torsion der Profilschiene ein besseres Anliegen derselben ermöglichen.

Einsetzbar sind Ausführungsbeispiele grundsätzlich bei allen Linearschienensystemen 210, also beispielsweise auch bei existierenden Positionierungssystemen, bei denen gegebenenfalls zusätzliche Bohrungen oder andere Befestigungsmittel integrierbar sind. So können beispielsweise die Positionierungssysteme bzw. Profilschlitten der Serien LTB, aber auch die Varianten TO/NSAS/RSS/LTS/TLM/Genius im Rahmen von Ausführungsbeispielen verwendet werden.

Zusammenfassend besteht so die Möglichkeit mit Hilfe eines Ausführungsbeispiels ein Andrücken der Schiene mit Hilfe eines Exzenterhebels 100 zu bewirken. Hierbei können verschiedene Exzenterhebel 100 für verschiedene Typen und/oder Größen vorgesehen werden. Der Exzenterhebel 100 kann hierbei gegebenenfalls auf die Geometrie des Unter - oder Oberteils, sowie auf die Profilschiene bzw. Präzisionsschiene angepasst werden. Je nach konkretem, gegebenenfalls existierendem, Linearschienensystem 210 kann hierbei das Einbringen einer Zusatzbohrungsreihe parallel zu den Schienenschraubenbohrungen, beispielsweise bei dem TLM/NSS/RSS/NSAS/TO/TS oder Genius-System implementiert werden. Bei anderen Systemen, etwa dem LTB-System oder LTS-System können gegebenenfalls bestehende Bohrungen, die als Befestigungsbohrungen schon vorhanden sind, verwendet werden. Hierbei kann es gegebenenfalls ratsam sein, in zukünftigen Produktgenerationen den Bohrungsabstand zu verkürzen.

Die in der vorstehenden Beschreibung, den Ansprüchen und den Zeichnungen offenbarten Merkmale können sowohl einzeln als auch in beliebiger Kombination für die Verwirklichung von Ausführungsbeispielen in ihren verschiedenen Ausgestaltungen von Bedeutung sein und - soweit sich nicht aus der Beschreibung etwas anderes ergibt - beliebig miteinander kombiniert werden.

## Patentansprüche

1. Verfahren zum Herstellen eines Linearschienensystems (210) mit einer auf einem Basisbauteil (220) befestigten Profilschiene (230), umfassend:
Vorjustieren der Profilschiene (230) auf dem Basisbauteil (220) derart, dass eine Ausrichtungsfläche (260) des Basisbauteils (220) und eine Ausrichtungsfläche (270) der Profilschiene (230) einander zugewandt sind oder miteinander in Kontakt stehen;
Bewirken einer Kraft zwischen dem Basisbauteil (220) und der Profilschiene mit Hilfe eines Exzenterhebels (100) derart, dass die Ausrichtungsflächen (260, 270) des Basisbauteils (220) und der Profilschiene (230) aufeinander gepresst werden; und
Befestigen der Profilschiene (230) auf dem Basisbauteil (220).

2. Verfahren nach Anspruch 1, bei dem das Bewirken der Kraft ein Verdrehen des Exzenterhebels (100) von einer ersten Verdrehposition in eine zweite Verdrehposition umfasst, wobei der Exzenterhebel (100) einen Anpresskörper (110), einen Hebel (120) und eine Achse (130) umfasst, wobei der Hebel (120) und der Anpresskörper (110) verdrehfest miteinander verbunden sind, wobei der Anpresskörper (110) ausgebildet ist, um in der ersten Verdrehposition im Wesentlichen keine Kraft zwischen dem Basisbauteil (220) und der Profilschiene (230) zu bewirken, und wobei der Anpresskörper (110) ferner ausgebildet ist, um in der zweiten Verdrehposition die Kraft zwischen dem Basisbauteil (220) und der Profilschiene (230) zu bewirken.

3. Verfahren nach einem der vorhergehenden Ansprüche, bei dem das Basisbauteil (220) eine Bohrung (290) umfasst, in die eine Achse (130) des Exzenterhebels (100) einführbar ist, und bei dem das Bewirken der Kraft ein Einführen der Achse (130) des Exzenterhebels (100) in die Bohrung (290) umfasst.

4. Verfahren nach einem der vorhergehenden Ansprüche, bei dem das Befestigen der Profilschiene (230) auf dem Basisbauteil (220) während des Ausübens der Kraft erfolgt.

5. Verfahren nach einem der vorhergehenden Ansprüche, bei dem das Befestigen der Profilschiene (230) ein Verschrauben der Profilschiene (230) mit dem Basisbauteil (220) umfasst.

6. Verfahren nach einem der vorhergehenden Ansprüche, bei dem das Befestigen der Profilschiene (230) das Befestigen an einer ersten Befestigungsposition und ein weiteres Befestigen an einer zweiten Befestigungsposition umfasst, wobei die erste Befestigungsposition von der ersten Befestigungsposition verschieden ist.

7. Verfahren nach einem der vorhergehenden Ansprüche, bei dem das Bewirken der Kraft zwischen dem Basisbauteil (220) und der Profilschiene (230) an einer ersten Position entlang einer Erstreckungsrichtung der Profilschiene (230) erfolgt, und das ferner wenigstens ein weiteres Bewirken einer Kraft zwischen dem Basisbauteil (220) und der Profilschiene (230) mit Hilfe des Exzenterhebels (100) oder eines weiteren Exzenterhebels (100) an einer zweiten Position entlang der Erstreckungsrichtung der Profilschiene (230) umfasst, sodass die Ausrichtungsflächen (260, 270) des Basisbauteils (220) und der Profilschiene (230) aufeinander gepresst werden, wobei die zweite Position von der ersten Position verschieden ist.

8. Kombinationsprodukt (200) eines Linearschienensystems (210) umfassend:
eine Profilschiene (230) mit einer Ausrichtungsfläche (270) und einer Anpressfläche (280);
ein Basisbauteil (220) mit einer Montagefläche (240) und einer Ausrichtungsfläche (260), wobei die Montagefläche (240) ausgebildet ist, sodass die Profilschiene (260) auf dieser angeordnet werden kann, und die beiden Ausrichtungsflächen (260, 270) der Profilschiene (230) und des Basisbauteils (220) miteinander in Kontakt bringbar sind;
ein Exzenterhebel (100), der einen Anpresskörper (110), einen Hebel (120) und eine Achse (130) umfasst, wobei der Hebel (120) und der Anpresskörper (110) verdrehfest miteinander verbunden sind, wobei der Exzenterhebel (100) ausgebildet ist, um mit der Profilschiene (230) oder dem Basisbauteil (220) drehbar verbindbar zu sein, wobei der Anpresskörper (110) ausgebildet ist, um in einer ersten Verdrehposition im Wesentlichen keine Kraft zwischen dem Basisbauteil (220) und der Profilschiene (230) zu bewirken, und wobei der Anpresskörper (110) ferner ausgebildet ist, um in einer zweiten Verdrehposition eine Kraft zwischen dem Basisbauteil (220) und der Profilschiene (230) derart zu bewirken, dass die Ausrichtungsflächen (260, 270) der Profilschiene (230) und das Basisbauteils (220) aneinander gepresst werden.

9. Kombinationsprodukt (200) nach Anspruch 8, bei dem der Anpresskörper (200) des Exzenterhebels (100) eine Anpressfläche (160) aufweist, die ausgebildet ist, um die Kraft zwischen dem Basisbauteil (220) und der Profilschiene (230) zu bewirken, wobei die Anpressfläche (160) des Exzenterhebels (100) in Richtung von der Achse (130) zu der Ausrichtungsfläche (260) des Basisbauteils (220) oder der Profilschiene (230) in der ersten Verdrehposition einen kleineren Abstand als in der zweiten Verdrehposition aufweist.

10. Kombinationsprodukt (200) nach einem der Ansprüche 8 oder 9, bei dem der Anpresskörper (110) des Exzenterhebels (100) eine Anpressfläche (160) aufweist, die ausgebildet ist, um die Kraft zwischen dem Basisbauteil (220) und der Profilschiene (230) zu bewirken, und bei dem die Anpressfläche (160) des Anpresskörpers einen Kunststoff, beispielsweise Polytetrafluorethylen, umfasst.
